# EUROPEAN PATENT APPLICATION

(11) **EP 1 632 336 A1**
(43) Date of publication of application: **08.03.2006**
(21) Application number: 05017232.9
(22) Date of filing: 08.08.2005
(51) Int. Cl.: B29D 30/30, B29D 30/60

(54) **Tire and method of manufacturing it**

(30) Priority: 03.09.2004 JP 2004257764
(71) Applicant: TOYO TIRE & RUBBER CO., LTD ., Osaka 550-0002 (JP)
(72) Inventor: Kudo, Shigeo Toyo Tire & Rubber Co., Ltd., Nishiku Osaka 550-0002 (JP); Tatara, Tetsuo Toyo Tire & Rubber Co., Ltd., Nishiku Osaka 550-0002 (JP); Tanabe, MasamiToyo Tire & Rubber Co., Ltd., Nishiku Osaka 550-0002 (JP)
(74) Representative: Strehl Schübel-Hopf & Partner

(57) **Abstract**

The present invention provides a tire which exhibits good weight balance and uniformity. As means to obtain the object, the first winding (M ₁ ) of the rubber strip material (1) at the start of winding is wound in the tire circumferential direction, the second winding (M ₂ ) and succeeding windings of the rubber strip material are, for every winding, wound in an inclined manner with respect to the tire circumferential direction within a portion along the tire circumference to impart a given pitch (D) and wound in the tire circumferential direction in regions other than the inclined region (G), and a final winding on the winding finishing side is wound in the tire circumferential direction overlapping the last inclined region (G) without being inclined and there is terminated.

## Description

### BACKGROUND OF THE INVENTION

### 1. Field of the Invention

The present invention relates to a tire which is constituted from a plurality of tire rubbers and a building method of the tire.

### 2. Description of the Related Art

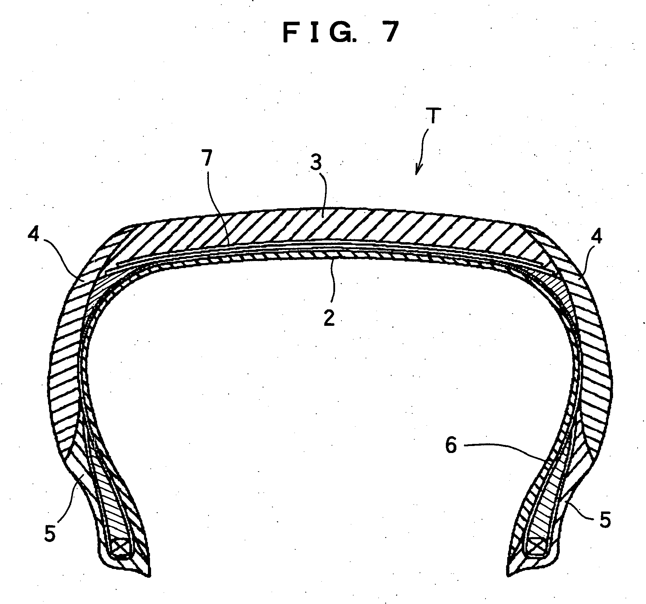

In general, a tire is constituted from a plurality of types of rubber used for tires. As a representative example, as shown in Fig. 7, respective portions consisting of an inner liner rubber portion 2, a tread rubber portion 3, side wall rubber portions 4, rim strip rubber portions 5 and the like are formed of rubber types with characteristics respectively required. These rubber members are combined with tire reinforcing members such as a carcass 6 and a belt 7 to construct a tire.

Conventionally, to form the respective rubber members, rubber material is continuously extruded from extruders using dies with the cross-sectional shapes of the desired rubber members, and thereafter the extruded materials are cut into predetermined sizes. The tire is assembled by sequentially adhering the rubber members on a rotary support body such as a building drum.

Further, in recent years, the strict accuracy has been demanded with respect to a tire shape and, at the same time, there arises drawbacks such as the distortion and the shrinkage of members occurring when the rubber members are continuously extruded from the extruders and, thereafter, are cut into predetermined sizes. In view of such circumstances, as disclosed in JP-A-1997-29858, there has been proposed a method in which an unvulcanized rubber strip material which is formed into a ribbon shape by extrusion is wound around a rotary support body such as a building drum in a spirally overlapping manner along the circumference of the tire to build a rubber member having a given cross-sectional shape.

In building a rubber member using the ribbon-shaped rubber strip material, when a winding starting position and a winding finishing position of the rubber strip material are largely displaced from each other in the circumferential direction of the tire, this may deteriorate the weight balance and the uniformity of the tire. In view of the above, the inventors of the present invention previously have proposed a method which can reduce the displacement between the winding starting position and the winding finishing position of the rubber strip material (JP-A-2002-178415).

Further, when the overlapping amount in the widthwise direction of the rubber strip material becomes excessively large, the unevenness in a cross-sectional shape of the rubber members built in this manner becomes large and hence, there arises a possibility that a desired cross-sectional shape cannot be obtained and, at the same time, a possibility that the unevenness adversely influences to the weight balance and the uniformity of the tire. In view of these drawbacks, the inventors of the present inventions also have proposed a method in which the rubber strip material is wound with the overlapping amount in the tire widthwise direction of the rubber strip material limited to a value within a fixed range (1/2 to 1/5 of the width of the rubber strip material) (JP-A-2002-205512) .

With respect to both tires which are disclosed in JP-A-2002-178415 and JP-A-2002-205512, the rubber member having the given shape is built with the displacement between the winding starting position and the winding finishing position of the rubber strip material in the circumferential direction of the tire set within a range of 0 to 5mm. Here, in the winding mode, basically, the first complete winding of the rubber strip material on the winding starting side and the last winding of the rubber strip material on the winding finishing side are wound in parallel in the tire circumferential direction orthogonal to the tire widthwise direction, while other winding portions of the rubber strip material consisting of the second winding and succeeding windings of the rubber strip material are wound in a spiral manner so as to advance one pitch in the widthwise direction per one winding or one rotation.

In the winding method, the first winding and the last winding of the rubber strip material are wound parallel to the tire circumferential direction. Accordingly, extra rubber portions which project sideward from both of left-and-right-side end portions as shown in the patent literature 1 are not formed and hence, the cutting treatment after winding becomes unnecessary. However, there arises a drawback that at the first one or several windings of the rubber strip material on the winding starting side as well as at the last one or several windings of the rubber strip material on the winding finishing side, the amount of wound rubber ( wound rubber layer) is increased, thus adversely influencing the tire uniformity.

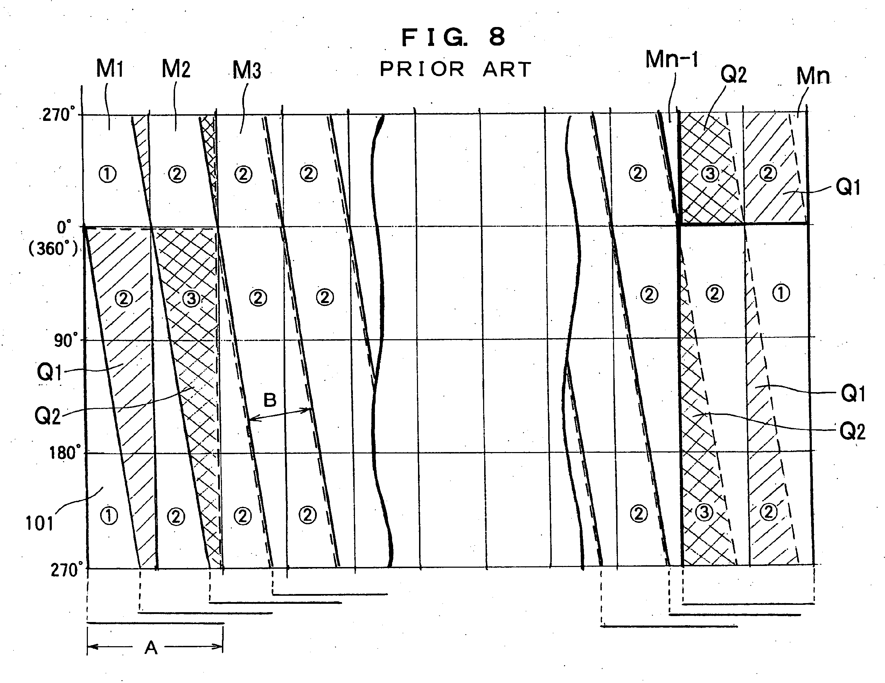

This drawback is further explained in detail in conjunction with Fig. 8. Fig. 8 is a developed plan view which schematically shows several windings of the rubber strip material 101 on the winding starting side and several windings of the rubber strip material 101 on the winding finishing side with respect to the winding state of the rubber strip material 101. The first winding of the rubber strip material 101 on the winding starting side is indicated by M₁, the second winding of the rubber strip material 101 is indicated by M₂, the third winding of the rubber strip material 101 is indicated by M₃, ... the (n-1) th winding of the rubber strip material 101 is indicated by Mₙ₋₁, and the last nth winding of the rubber strip material 101 is indicated by Mₙ. That is, Fig. 8 shows the state in which the first winding M₁ of the rubber strip material 101 and the last winding Mₙ of the rubber strip material 101 are wound in parallel to the tire circumferential direction and orthogonal to the tire widthwise direction, and the intermediate windings M, consisting of the second and the succeeding windings of the rubber strip material 101, are wound in a spiral manner. Further, the overlapping margin B of the rubber strip material 101 is set to 1/2 of the frequently used width A of the rubber strip material 101. Circled numbers in the drawing shows the number of overlapping layers of the rubber strip material 101.

When the overlapping margin B is set to 1/2 of the width A of the rubber strip material 101, the ideal overlapping of the rubber strip material 101 is such that the first 1/2 width of the first winding has one layer, the second winding M₂ which overlaps the remaining 1/2 width of the first winding and succeeding windings have two layers, and the last 1/2 width of the last nth winding Mₙ has one layer.

However, when the first one winding M₁ of the rubber strip material 101 and the last nth winding Mₙ of the rubber strip material 101 are wound in parallel to the tire circumferential direction and the second winding M₂ and the succeeding windings of the rubber strip material 101 are wound in a spiral manner, as shown in Fig. 8, the spiral second winding M₂ overlaps the first 1/2 width portion of the first winding M₁, building a two-layer portion Q1 (hatched lines). Further, an overlapping portion Q2 (lattice pattern) having three layers is generated on the remaining 1/2 width portion of the first winding M₁ due to the spiral winding of the third winding M₃. Similar overlapping portions are generated with respect to the nth winding Mₙ and the (n-1)th winding Mₙ₋₁ of the rubber strip material 101 on the winding finishing side. Further, the overlapping portion Q1 having two layers at a portion where one layer is sufficient and the overlapping portion Q2 having three layers at a portion where two layers are sufficient extend in an elongated manner in the circumferential direction substantially over the full length due to the spiral winding and hence, the excess rubber amount exceeding the ideal amount at the undesired overlapping portions is increased, thus adversely influencing the weight balance of the tire and the uniformity of the rubber strip materials, and thus having adverse influence on the tire uniformity.

### SUMMARY OF THE INVENTION

The present invention has been made in view of such circumstances and it is an object of the present invention to provide a tire which is constituted by including a plurality of tire rubber members and, in building at least one rubber member by overlapping a ribbon-shaped rubber strip material, can minimize undesired overlapping portions and thus exhibit favorable weight balance and uniformity whereby favorable tire uniformity characteristics can be attained, and a tire construction method for obtaining such a tire.

To achieve the object, according to the first aspect of the present invention, there is provided a tire which is constituted by including a plurality of rubber members for tires, in which at least one rubber member is built by overlapping a portion of a ribbon-like rubber strip material along the tire circumferential direction, wherein the rubber strip material is built such that the first winding of the rubber strip material on a winding starting side is wound in the tire circumferential direction which is orthogonal to the tire-widthwise direction from a winding starting position, a second winding and succeeding windings of the rubber strip material are wound in an inclined manner with respect to the tire circumferential direction within a given portion ("inclined region") along the tire circumference, imparting a given pitch in the tire widthwise direction and are wound in the tire circumferential direction orthogonal to the tire widthwise direction in the regions other than the inclined region, and the final winding on the winding finishing side is wound in the tire circumferential direction orthogonal to the tire widthwise direction over the inclined region without being inclined and thus is terminated.

In the tire having such a constitution, at least one rubber member which is formed by winding the rubber strip material is configured such that, due to the winding mode, in addition to the winding of the first winding on the winding starting side and the winding of final winding in the tire circumferential direction, the inclined region for imparting pitch to every winding from the second winding onward is limited to one portion in the tire circumferential direction, and the portions other than the inclined region are wound in the tire circumferential direction. That is, windings in the portions other than the inclined region are arranged parallel with the tire circumferential direction.

Accordingly, there are only very small undesired overlapping portions generated at the first winding or first few windings on the winding starting side and last winding or the last few windings on the winding finishing side of the rubber strip material, in the inclined region which is one portion along the tire circumference. Accordingly, there is no possibility that the weight balance and the uniformity of the tire as a whole are largely deteriorated and hence, the adverse influence given to the uniformity of the tire can be made extremely small.

The rubber strip material is wound so that the winding finishing position is shifted away from the winding starting position in the winding direction, and the length of the inclined regions is limited to less than the shift between the winding starting position and the winding finishing position. Accordingly, by decreasing the length of the inclined region in the tire circumferential direction, the positional displacement between the winding starting position and the winding finishing position can be decreased and hence, the weight balance of the tire can be further enhanced, thus increasing the tire uniformity. Further, when a plurality of rubber members are built by using the above winding method of the rubber strip material, by shifting the winding starting positions of the rubber strip materials of respective rubber members in the circumferential direction, it is possible to even shift the inclined regions where the rubber strip materials of respective rubber members assume an inclined state with respect to the tire circumferential direction by displacing the rubber strip materials in the tire circumferential direction, whereby the balance characteristics of the tire can be further enhanced.

Particularly, with respect to the tire in which the width of the rubber strip material is 5 to 50mm and an overlapping margin is 4/5 to 1/5 of the width of the rubber strip material, it is preferable that the inclination angle of the rubber strip material with respect to the tire circumferential direction in the inclined region is set to 45° or below, and the length in the tire circumferential direction of the inclined region is not smaller than 1/5 times of and not more than 5 times greater than the width of the rubber strip material.

Accordingly, it is possible to wind the rubber strip material by inclining the rubber strip material at the portion of the tire circumferential direction without any of the problems mentioned previously and hence, the winding of the rubber strip material in the tire building can be performed smoothly, thus realizing production a well-balanced tire.

When the inclination angle of the rubber strip material in the inclined region exceeds 45°, in the winding of the rubber strip material the deformation between the region oriented in the tire circumferential direction and the inclined region is increased. Further, when the length in the tire circumferential direction of the inclined region becomes smaller than 1/5 of the width of the rubber strip material, the overlapping margin is increased. Accordingly, even when the feed pitch is small, the deformation at the boundary portion between the the inclined region and other regions of the rubber strip material is increased and hence, the winding becomes difficult. Further, when the length in the tire circumferential direction of the inclined region exceeds a value which is 5 times the width of the rubber strip material, the undesired overlapping portion is increased depending on the width of the rubber strip material, and hence, it is difficult to obtain the weight-balancing and uniformity enhancing effect. Accordingly, it is desirable to set the length in the tire circumferential direction of the inclined region to the value which falls in the above range.

According to the second aspect of the present invention, there is provided a method for manufacturing a tire which is constituted by including a plurality of above-mentioned rubber members for tires. The method includes a step in which at least one rubber strip material is built by winding a ribbon-like rubber strip material so that a portion of the rubber strip material overlaps itself in the tire circumferential direction. In this building-by-winding step, the first winding of the rubber strip material is wound in the tire circumferential direction which is orthogonal to the tire widthwise direction from a set winding starting position, and subsequently a second and succeeding windings of the rubber strip material are wound in an inclined manner within one portion along the tire circumference to impart a given pitch to the rubber strip material in the tire widthwise direction for every winding, and the rubber strip material is wound in the tire circumferential direction orthogonal to the tire widthwise direction in portions other than the inclined region, and a final winding on the winding finishing side going over the inclined region is wound in the tire circumferential direction orthogonal to the tire widthwise direction and is terminated without being inclined.

Due to such a constitution, undesired overlapping portions of the rubber strip material can be reduced and hence, as mentioned previously, it is possible to enhance the weight balance and the uniformity as a whole, thus realizing the production of the tire of the present invention which exhibits favorable tire uniformity.

Further, by winding the rubber strip material in this manner, the length in the tire circumferential direction of the inclined region is limited to less than the positional displacement between the winding starting position and the winding finishing position of the rubber strip material and hence, by setting the length of the inclined region to a small value, the positional displacement between the winding starting position and the winding finishing position also becomes small, whereby the weight balance and the uniformity of the rubber members can be enhanced and the uniformity of the tire can also be improved.

In the building-by-winding step, the rubber strip material is supplied to a given rotary support body and is wound due to the rotation of a rotary support body and, only at rotational angle portions corresponding to the inclined regions of the second winding and succeeding windings, the unit for supplying the rubber strip material is controlled to be moved in the widthwise direction relative to the rotary support body, thus inclining the rubber strip material while winding the rubber strip material, to impart a given pitch in the widthwise direction. Accordingly, it is possible to automate the winding state in which the inclined region of winding of the rubber strip material is set only at one portion along the tire circumference, and hence the productivity is enhanced.

In the tire manufacture method, it is preferable that the winding of the rubber strip material is performed such that the inclination angle of the inclined portion of the rubber strip material with respect to the tire circumferential direction is set to 45° or less. Due to such a winding operation, the deformation of the rubber strip material at the boundary between the region wound in the tire circumferential direction and the inclined region does not become excessively large during the winding of the rubber strip material whereby, it is possible to smoothly perform the building-by-winding even though only one portion along the tire circumference is inclined.

Further, it is preferable that the length in the tire circumferential direction of the inclined region is set to 1/5 or less of the length of one winding the rubber strip material. Due to such a constitution, the weight balance and the uniformity can be favorably maintained.

Assuming the width of the rubber strip material to be 5 to 50mm and the overlapping margin of the rubber strip material to be 4/5 to 1/5 of the width of the rubber strip material, it is appropriate that the inclination angle of the rubber strip material with respect to the tire circumferential direction in the inclined region is 45° or less and the length of the inclined region in the tire circumferential direction is between 1/5 and 5 times the width of the rubber strip material. Due to such a limitation, it is possible to build various kinds of rubber members for tires by winding ribbon-shaped rubber strip material without giving rise to any problems. Further, such a limitation, allows setting of the inclined region at one portion of the rubber strip material in the winding of the rubber strip material, and as well increases the compatibility to changes in the rubber strip material and hence, it is possible to apply the present invention to the building of various rubber members.

As described above, according to the tire and the tire building method of the present invention which forms the rubber member for a tire by winding the ribbon-like rubber strip material, as the winding mode of the rubber strip material, in addition to the first winding on the winding starting side and the final winding which are oriented in the tire circumferential direction, with respect to the winding portions of the second and succeeding windings, for every winding, the rubber strip material is wound in an inclined manner to impart a given pitch within one portion along the tire circumference, and is wound parallel to the tire circumferential direction in all other portions. Accordingly, there are only very small undesired overlapping portions at the first winding or first few windings on the winding starting side and the last winding or the last few windings on the winding finishing side of the rubber strip material in the inside of the inclined regions in the portion of the tire circumferential direction. Accordingly, there is no possibility that the weight balance and the uniformity of the tire as a whole are largely deteriorated and hence, the uniformity of the tire can be improved.

Further, by merely inclining the rubber strip material obliquely only at one portion along the circumference and by winding the rubber strip material parallel to the tire circumferential direction at other portions, compared to the rubber strip material which is spirally wound throughout a winding, the inclined region is small and hence the winding state becomes relatively stable and, at the same time, the present invention can easily cope with the change of the width, the thickness, the overlapping margin and the like of the rubber strip material whereby the present invention is applicable to the building of rubber members having various shapes.

### BRIEF EXPLANATION OF THE DRAWINGS

Fig. 1 is a schematic perspective view for explaining an embodiment of the present invention in which a ribbon-like rubber strip material is wound;
Fig. 2 is a schematic front view of the same;
Fig. 3A and Fig. 3B are enlarged views which respectively show a portion of a winding starting end and a portion of a winding finishing end shown in Fig. 2;
Fig. 4 is an explanatory view of the winding state of a rubber strip material, which schematically shows several windings on the winding starting side and several windings on the winding finishing side laid out on a plane;
Fig. 5 is a schematic view for explaining a method for building a rubber member by winding a ribbon-shaped rubber strip material which is supplied by extrusion from a supply unit such as an extruder;
Fig. 6A, Fig. 6B, Fig. 6C, Fig. 6D, Fig. 6E, Fig. 6F, Fig. 6G and Fig. 6H are respectively schematic views showing examples of the combination of various widths, overlapping margins, inclination angles and the like in the rubber strip material;
Fig. 7 is a cross-sectional view for explaining the tire structure; and
Fig. 8 is an explanatory view of the winding state of a conventional rubber strip material which schematically shows several windings on the winding starting side and several windings on the winding finishing side laid out on a plane .

### BEST MODE FOR CARRYING OUT THE PRESENT INVENTION

Next, the mode for carrying out the present invention is explained based on embodiments shown in the drawings.

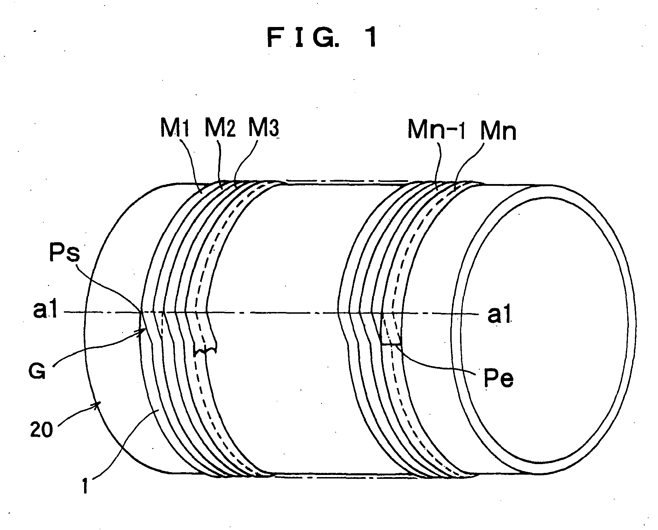

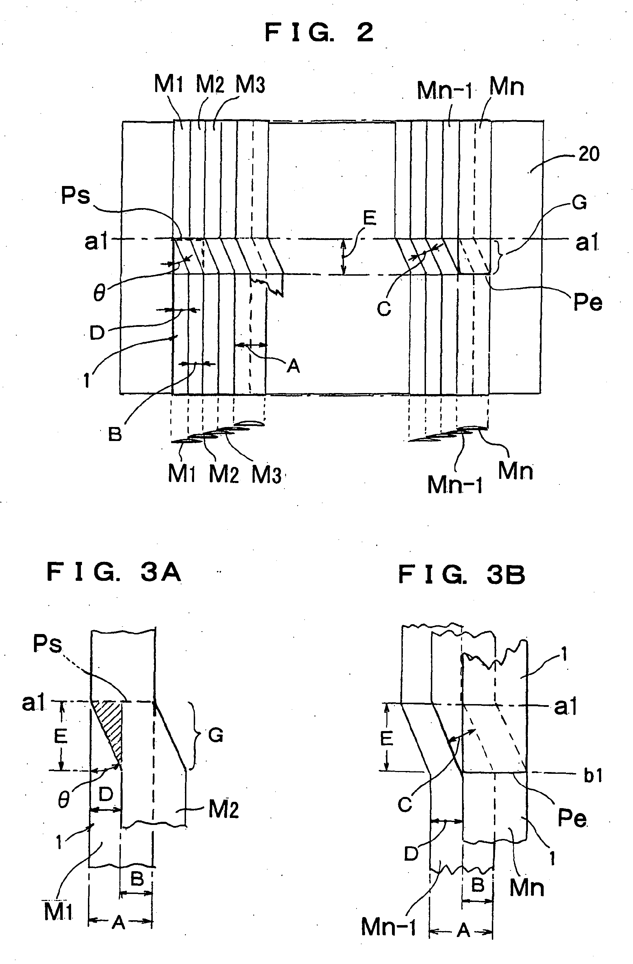

Fig. 1 and Fig. 2 are schematic views for explaining the winding state of a ribbon-like rubber strip material 1 which is supplied to a rotary support body 20 such a building drum or the like according to the present invention, wherein Fig. 1 is a schematic perspective view, Fig. 2 is a schematic front view. Fig. 3A and Fig. 3B are views showing a portion of a winding starting end and a portion of a winding finishing end shown in Fig. 2.

As shown in Fig. 7, according to the present invention the basic constitution a tire T comprises a plurality of rubber members including an inner liner rubber portion 2, a tread rubber portion 3, side wall rubber portions 4, and rim strip rubber portions 5. These rubber members are combined with tire reinforcing members such as a carcass 6, a belt 7 and the like to build the tire T. Such a constitution is the same as that of a conventional tire.

Then, at least one of, preferably a plurality of, or all of the rubber members which constitute the tire T are built such that, in a building step of the tire manufacture, a ribbon-like rubber strip material 1 which is extruded in an elongated manner from a supply unit such as an extruder is wound in the tire circumferential direction with portions thereof overlapping each other.

The cross-sectional shape of the rubber strip material 1 has a ribbon shape having a relatively flat cross-sectional shape whose thickness has a maximum value at the center portion and is gradually decreased from the center portion to both side ends; for example, an approximately crescent shape, an approximately flat triangular shape or a flat trapezoidal shape. It is practically preferable to use a relatively flat ribbon-like rubber strip material 1 which has a width of 5 to 50mm, a thickness at the center portion of 0.5 to 3.0mm, and a thickness at both side ends from 0.05 to 0.2mm.

The winding mode of the rubber strip material 1 is explained in conjunction with the drawing, taking the case in which the rubber member which constitutes the inner liner rubber portion 2 in the tire T shown in Fig. 7, for example, is built by winding.

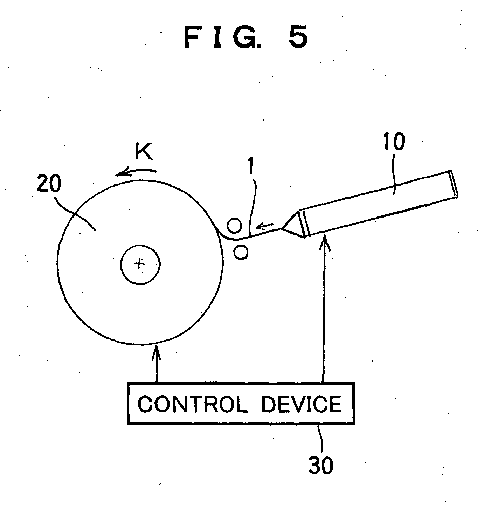

Fig. 5 is a schematic view showing the basic constitution of a device for winding the rubber strip material 1. That is, Fig. 5 shows a case in which the supply unit 10 such as an extruder of the rubber strip material 1 is arranged to face the rotary support body 20 and the rubber strip material 1 which is supplied in a ribbon shape having a given cross-sectional shape from the supply unit 10 is directly supplied and wound around the rotary support body 20. The rotary support body 20 is rotatable on a shaft 20a and the rubber strip material 1 is wound along the tire circumferential direction as shown in Fig. 1 and Fig. 2 while rotating the rotary support body 20 in the direction K in Fig. 5.

In an example shown in Fig. 1 to Fig. 4, there is described a state in which an overlapping margin B of the rubber strip material 1 is set to 1/2 of a width A of the rubber strip material 1 and is wound from the left side to the right side. In the drawing, the first winding at the winding starting side is indicated by M₁, the second winding is indicated by M₂, the third winding is indicated by M₃, ... the (n-1)th winding is indicated by Mₙ₋₁, and the last, nth, winding is indicated by Mₙ.

Then, as shown in Fig. 2 (Fig. 3), the first winding M₁ at the winding start side is wound in the tire circumferential direction orthogonal to the tire widthwise direction. Further, after this winding operation, in the second winding after reaching the winding starting position Ps and each succeeding winding, within a portion of one winding in the tire circumferential direction; particularly, within a region G of a given length (a given angle) in the tire circumferential direction from the winding starting position Ps (on widthwise line a1-a1 ), the rubber strip material 1 is wound in an obliquely inclined manner with respect to the tire circumferential direction so as to impart a given pitch D corresponding to the overlapping margin B in the tire widthwise direction. On the other hand, in regions other than the inclined regions G, the rubber strip material 1 is wound in parallel in the tire circumferential direction which is orthogonal to the tire widthwise direction at the position which has been shifted due to the above inclination. Symbol θ in the drawing indicates the above-mentioned inclination angle.

Further, in the last, nth, winding Mₙ at the winding finishing side, one winding is made which continues from the inclined region G, in the tire circumferential direction which is orthogonal to the tire widthwise direction and is terminated at the vicinity of the end of the inclined region G after overlapping the inclined region G without being inclined. That is, the rubber strip material 1 assumes a winding state in which the winding finishing position Pe is displaced from the winding starting position Ps in the winding direction, and the inclined region G is set within the range of this positional displacement. Accordingly, by decreasing the length E in the tire circumferential direction of the inclined region G, it is also possible to decrease the positional displacement between the winding starting position Ps and the winding finishing position Pe.

In winding the rubber strip material 1, the rotary support body 20 is rotated and, at the same time, to impart a given pitch D in the widthwise direction, in the rotational angle range corresponding to the inclined region G of the second winding and all the succeeding windings, the supply unit 10 shown in Fig. 5 is moved relative to the rotary support body 20 along the tire widthwise direction. Accordingly, either the supply unit 10 or the rotary support body 20 is moved along the tire widthwise direction. Due to this movement in the tire widthwise direction and the rotation of the rotary support body 20, it is possible to incline the rubber strip material 1 within the inclined region G. Further, the inclination angle θ can be suitably set by adjusting the rotational speed of the rotary support body 20, in particular the rotational speed in the circumferential direction of the outer periphery (a winding portion), and the speed of the movement in the widthwise direction.

Further, in other rotational angle portions (where the rubber strip material 1 is oriented in the tire circumferential direction) excluding the inclined regions G in the second and succeeding windings, by performing control so that the supply unit 10 is not moved relative to the rotary support body 20 in the tire widthwise direction, it is possible to wind the rubber strip material 1 in parallel to the tire circumferential direction. Also, with respect to the first winding M₁ and the last winding which continues from the inclined region G of the nth winding Mₙ, by performing a control so that the supply unit 10 does not perform the relative movement in the tire widthwise direction with respect to the rotary support body 20, it is possible to wind the rubber strip material 1 in the tire circumferential direction. A control device 30 shown in Fig. 5 performs the control of the winding operation by the supply unit 10 and rotary support body 20.

In the winding, although the respective conditions such as the width A, the overlapping margin B, the overlapping margin C within the inclined region G, the feed pitch D in the widthwise direction, the length E in the tire circumferential direction of the inclined regions G, the inclination angle θ, and the like can be suitably set to enable the building by winding in conformity with the kind and the mode of the tire-use rubber member to be built, it is preferable in practice to set these conditions as follows.

The inclination angle θ is preferably set to 45° or less. That is, the larger the inclination angle θ becomes, the larger the deformation at the connection between the portion oriented in the tire circumferential direction and the inclined portion in the winding of the rubber strip material 1. Particularly, when the inclination angle θ exceeds 45°, the winding (lamination over this region) becomes difficult and hence, the object of the present invention cannot be achieved. Accordingly, irrespective of the width A, the overlapping margin B and other properties of the rubber strip material 1, it is preferable in practice to set the inclination angle θ to 45° or less. Here, when the inclination angle θ is set to a small value, in view of the relationship with the width A and the overlapping margin B of the rubber strip material 1, the length E of the inclined region G in the tire circumferential direction becomes large and hence, it is preferable to set the angle θ such that the length E is not excessively increased.

Further, although the length E in the tire circumferential direction of the inclined region G which allows the given feed pitch D by inclining the rubber strip material 1 can be determined in response to the width A and the overlapping margin B of the rubber strip material 1, the pitch D of winding in the widthwise direction and the inclination angle θ, the larger the length E becomes, the more difficult it becomes to sufficiently reduce overlapping to have advantageous effect on the weight balance and the uniformity. Accordingly, the length E is limited to 1/5 or less of the length of one winding, preferably to 1/10 or less, and further preferably 5 times or less the width A of the rubber strip material 1. That is, it is preferable to set the length E as short as possible. However, when the length E is excessively short, depending on the width A and the overlapping margin B or the pitch D of the rubber strip material 1, the inclination angle θ is increased thus giving rise to a case that the winding becomes difficult. Accordingly, in practice the length E is set so that the inclination angle θ does not exceed 45°. For example, it is preferable to set the length E from 1/5 to 5 times the width A of the rubber strip material 1.

Further, the overlapping margin B of the rubber strip material 1 is set to fall within a range of 4/5 to 1/5 of the width A of the rubber strip material 1. Further, the feed pitch D in the widthwise direction, that is, the feed amount in the widthwise direction in the inclined region G is set to 1/5 to 4/5 of the width A of the rubber strip material 1 corresponding to the overlapping margin B. That is, when the overlapping margin B is 4/5 of the width A, the pitch D becomes 1/5 of the width A.

By setting the overlapping margin B and the inclination angle θ based on the width A (5 to 50mm) of the rubber strip material 1 used, it is possible to determine the length E in the tire circumferential direction of the inclined regions G, the overlapping margin C within the inclined regions G, the feed pitch D in the widthwise direction and the like. The control of the overlapping margin B and the inclination angle θ is performed by controlling the speed and the movement amount of relative movement in the tire widthwise direction between the supply unit 10 and the rotary support body 20 using the control device 30.

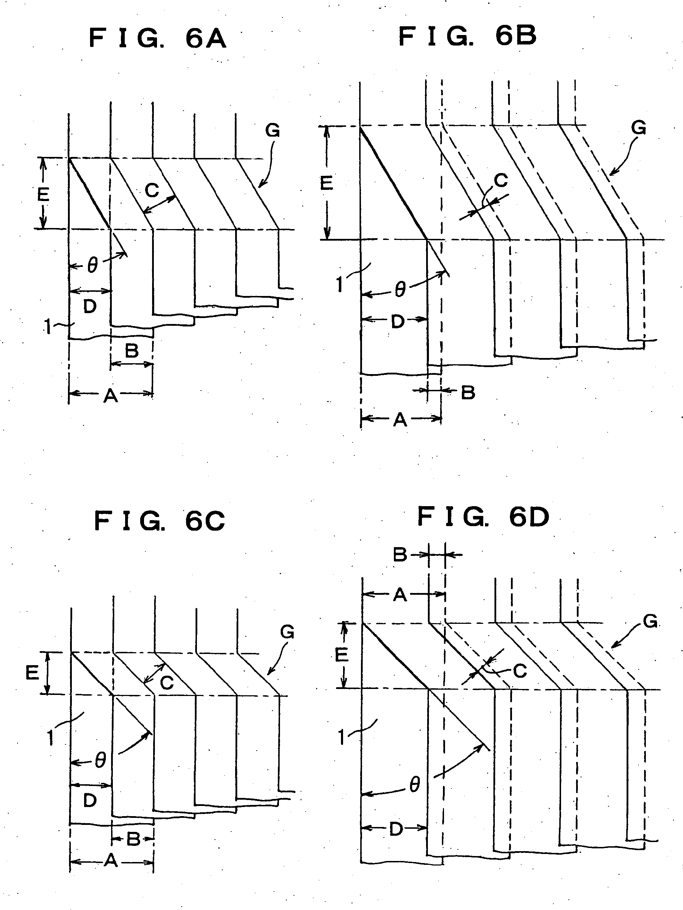

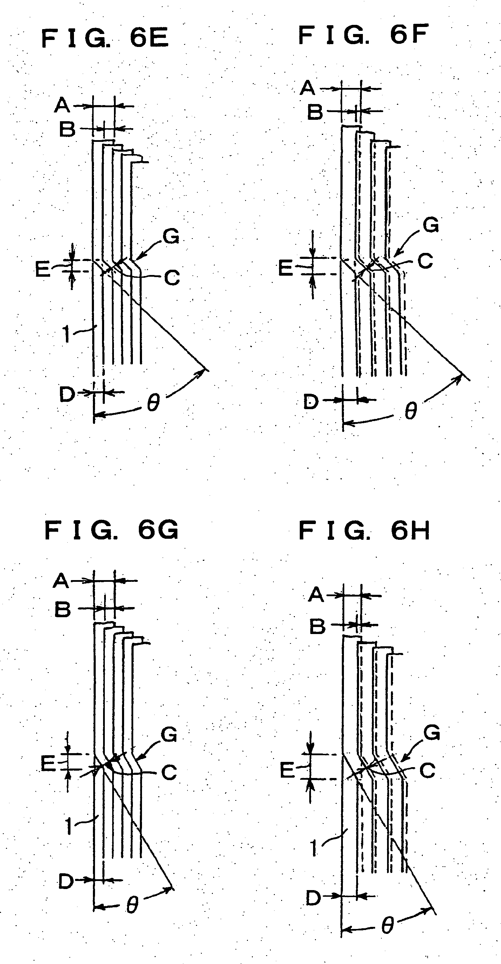

Fig. 6A, Fig. 6B, Fig. 6C, Fig. 6D, Fig. 6E, Fig. 6F, Fig. 6G and Fig. 6H respectively show examples of combinations of various lengths E in the tire circumferential direction of the inclined region G, overlapping margins B of the rubber strip material 1 , feed pitches D and inclination angles θ. Further, the following Table 1 shows the combination examples of the width A, the overlapping margin B, the overlapping margin C in the inside of the inclined region G, the feed pitch D in the widthwise direction, the length E in the tire circumferential direction of the inclined regions G, the inclination angle θ and the like of the rubber strip material 1. In Table 1, the overlap ratio B/A is the ratio of the overlapping margin B with respect to the width A of the rubber strip material 1. The types 3 to 6, 9, 10, 12, 13 in Table 1 respectively correspond to Fig. 6A, Fig. 6B, Fig. 6C, Fig. 6D, Fig. 6E, Fig. 6F, Fig. 6G and Fig. 6H.

**Table 1**

| Type | Strip material width (A) mm | Overlapping margin (B) mm | Overlapping margin of inclined region (C) mm | Feed pitch (D) mm | Length of inclined region (E) mm | Inclination angle (θ) | Overlap ratio (B/A) |
|---|---|---|---|---|---|---|---|
| 1 | 50 | 10 | 8.9 | 40 | 78.5 | 27 | 0.2 |
| 2 | 50 | 25 | 22.3 | 25 | 49.1 | 27 | 0.5 |
| 3 | 50 | 10 | 7.2 | 40 | 40.0 | 45 | 0.2 |
| 4 | 50 | 10 | 8.7 | 40 | 69.3 | 30 | 0.2 |
| 5 | 50 | 25 | 21.7 | 25 | 43.3 | 30 | 0.5 |
| 6 | 50 | 25 | 17.7 | 25 | 25.0 | 45 | 0.5 |
| 7 | 50 | 40 | 35.8 | 10 | 20.0 | 27 | 0.8 |
| 8 | 5 | 2.5 | 2.2 | 2.5 | 4.9 | 27 | 0.5 |
| 9 | 5 | 2.5 | 1.8 | 2.5 | 2.5 | 45 | 0.5 |
| 10 | 5 | 1 | 0.7 | 4 | 4.0 | 45 | 0.2 |
| 11 | 5 | 1 | 0.9 | 4 | 7.9 | 27 | 0.2 |
| 12 | 5 | 2.5 | 2.2 | 2.5 | 4.3 | 30 | 0.5 |
| 13 | 5 | 1 | 0.9 | 4 | 6.9 | 30 | 0.2 |
| 14 | 5 | 2.5 | 2.5 | 2.5 | 20.0 | 7 | 0.5 |
| 15 | 5 | 4 | 4.0 | 1 | 20.0 | 3 | 0.8 |

Due to the winding of the rubber strip material 1, the first winding M₁ on the winding starting side and the last winding which continues from the inclined region G of the nth winding Mₙ are wound in the tire circumferential direction, and the portions other than the inclined regions G of pitch feed windings starting from the second winding M₂ are wound in the tire circumferential direction. That is, all other portions except for the inclined regions G are wound in the tire circumferential direction.

Accordingly, there are only very small undesired overlapping portions in the first winding or the first few windings on the winding starting side and the last winding or the last few windings on the winding finishing side of the rubber strip material 1 within the inclined regions at one portion along the tire circumference.

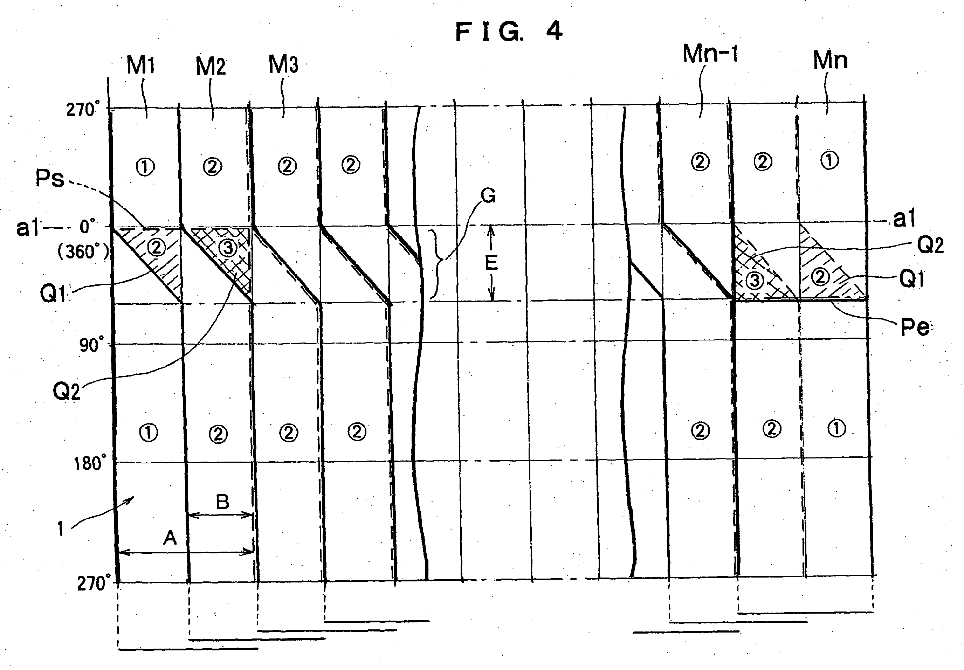

This point is explained based on Fig. 4 in comparison with the constitution shown in Fig. 8. Fig. 4 shows a case in which the rubber strip material 1 is wound in a state that the overlapping margin B of the rubber strip material 1 is set to 1/2 of the width A of the rubber strip material 1 in the same manner as the case shown in Fig. 8. Circled numbers in portions of the drawing show the number of overlapping layers of rubber strip material in that portion. In Fig. 4, the first winding M₁ and the winding which continues from the inclined region G of the last nth winding Mₙ are wound in the tire circumferential direction, and the other windings including the second winding M₂ are wound in an inclined manner only in the regions G along the tire circumference to impart pitch D and are in the tire circumferential direction at portions other than the inclined regions G.

Accordingly, in the inclined region G, at the first widthwise half of the first winding M₁ which ideally has one layer, an overlapping portion Q1 (hatched in the diagram) having two layers is generated on the portion of the inclined region G due to the oblique winding of the next second winding M₂ and, further, at the other half of the first winding M₁, an overlapping portion Q2 (grid in the diagram) having three layers is generated due to the oblique winding of the third winding M₃. Further, the similar overlapping is generated at the nth winding Mₙ on the winding finishing side and the (n-1) th winding Mₙ₋₁.

However, there are only very small overlapping portions having two layers where ideally there is only one layer and very small overlapping portions having three layers where ideally there are only two layers in the inclined regions G which are set along the tire circumference as shown in the drawing. Accordingly, compared to the case shown in Fig. 8 in which the undesired overlapping portions Q1, Q2 are generated over the full circumference in a spiral manner, the influence of the undesired overlapping portions Q1, Q2 is extremely small. Accordingly, these undesired overlapping portions Q1, Q2 hardly at all influence the weight balance and the uniformity of the tire, thus allowing the tire to maintain favorable uniformity.

Here, in the winding of the rubber strip material 1, if the first winding M₁ and the last, nth, winding Mₙ are inclined at an angle θ in the same manner as the second winding M₂ and the succeeding windings, excess projecting portions are generated on both the left and right side end portions and it is necessary to perform cutting treatment after winding. However, as described previously, by winding the first winding M₁ and the portion corresponding to one winding, which continues from the inclined portion of the last nth winding Mₙ, in the tire circumferential direction, the above-mentioned projecting portions are not formed on both side ends and hence, the treatment to cut the excess portions is unnecessary.

Further, in the winding of the rubber strip material 1, it is possible to change the overlapping condition and the cross-sectional shape of the neighboring rubber strip materials in the course of winding. Due to such a provision, it is possible to form the shape of the rubber member more accurately and hence, it is possible to build the targeted tire more accurately.

Further, in building a plurality of rubber members for tires by applying a winding mode of the rubber strip material 1 similar to the above-mentioned winding mode, when the winding starting positions of the rubber strip materials corresponding to the respective rubber members are concentrated at the substantially same position on the circumference of the tire, the inclined regions in the respective windings are also concentrated at the same position on the circumference of the tire, thus giving rise to a possibility that the balance characteristics are deteriorated. Accordingly, it is preferable to shift the winding starting positions of the rubber strip materials of the respective rubber members along the tire circumference, the shift set to 10° or more.

Further, when the rubber member which constitutes the tread rubber portion 3 is constructed with a winding mode similar to the above-mentioned winding mode using two rubber strip materials for a first-layer and second-layer, it is preferable that there is a shift in the tire circumferential direction of 10° or more in the starting position for winding the first-layer (lower-layer) rubber strip material and the starting position for winding the second-layer (upper-layer) rubber strip material.

Here, since the inclined region which is provided for imparting a given pitch in the widthwise direction is formed between the winding starting position and the winding finishing position, by setting the shift of the winding finishing position with respect to the winding starting position to 10° or more, the shift of the inclined regions of respective rubber members also becomes 10° or more.

In this manner, in building the respective rubber members by winding the rubber strip materials 1, it is possible to maintain favorable tire performance with regard to such factors as weight balance.

Here, in the explanation of the above-mentioned building method, the explanation is made with respect to the case in which the building by winding of the rubber strip material 1 is performed by extruding the rubber strip material 1 from a supply unit 10 such as an extruder and supplying it to the rotary support body 20 such as a building drum simultaneously with the extrusion. However, the building by winding may be performed such that the rubber strip material is extruded in a step different from the winding step, the extruded rubber strip material is transferred to the site of the building-by-winding step, and the rubber strip material is continuously supplied to the rotary support body by way of a supply device.

As has been described heretofore, the present invention is suitably applicable to the case in which the tire is manufactured by building the rubber members for the tire, and the building is performed by winding the ribbon-like unvulcanized rubber strip materials in a spirally overlapping manner in the tire circumferential direction on a rotary support body such as a building drum.

## Claims

1. A tire (T) whose constitution includes a plurality of rubber members for tires, at least one of these rubber members being built by winding a ribbon-like rubber strip material (1) along the tire circumferential direction, portions of the strip overlapping each other,
wherein the rubber strip material (1) is built such that the first winding (M₁) of the rubber strip material (1) at the start of winding is wound in the tire circumferential direction orthogonal to the tire-widthwise direction from a set winding starting position (Ps), the second winding (M₂) and succeeding windings of the rubber strip material (1) are, for every winding, wound in an inclined manner with respect to the tire circumferential direction after the rubber strip material (1) reaches the winding starting position (Ps) within a given portion, here called the inclined region (G), along the tire circumference to impart a given pitch (D) in the tire widthwise direction, and are wound in the tire circumferential direction orthogonal to the tire widthwise direction in regions other than the inclined region (G), and the final winding on the winding finishing side also is wound in the tire circumferential direction orthogonal to the tire widthwise direction continuing from an inclined region (G), overlaps the inclined region (G) without being inclined and there is terminated.

2. A tire according to claim 1, wherein with respect to the tire in which the width (A) of the rubber strip material (1) is 5 to 50mm and the overlapping margin (B) is 4/5 to 1/5 of the width (A) of the rubber strip material (1), in the inclined region (G) the inclination angle (θ) of the rubber strip material (1) with respect to the tire circumferential direction is set to 45° or less, and the length (E) in the tire circumferential direction of the inclined region (G) is no less than 1/5 and no more than 5 times the width (A) of the rubber strip material (1).

3. A method for manufacturing a tire which includes a plurality of the above-mentioned tire-use rubber members,
wherein the method includes a step in which at least one rubber member is built by winding a ribbon-like rubber strip material (1) in the tire circumferential direction so that portions of the rubber strip material (1) overlap each other, and
in the building-by-winding step, the first winding (M₁) of the rubber strip material (1) at the start of winding is wound in the tire circumferential direction orthogonal to the tire widthwise direction from a set winding starting position (Ps), and subsequently, the second and succeeding windings of the rubber strip material (1) are, after reaching the winding starting position (Ps), wound in an inclined manner within a portion along the tire circumference, here called the inclined region (G), to impart a given pitch (D) to the rubber strip material (1) in the tire widthwise direction for every winding, and the rubber strip material (1) is wound in the tire circumferential direction which is orthogonal to the tire widthwise direction in portions other than the inclined region (G), and the final winding on the winding finishing side is wound in the tire circumferential direction orthogonal to the tire widthwise direction continuing from the inclined region (G), overlaps the inclined region (g) without being inclined, and there is terminated.

4. A method for building a tire according to claim 3, wherein in the building-by-winding step, the rubber strip material (1) is supplied to and wound around a given rotary support with the rotation of the rotary support body (20) and, only at a rotational angle portion of the rotary support body (20) corresponding to the inclined region (G) of the second and succeeding windings, the unit supplying the rubber strip material (1) is controlled to be moved in the widthwise direction relative to the rotary support body (20), thus inclining the rubber strip material (1) while winding the rubber strip material (1) to impart a given pitch (D) in the widthwise direction.

5. A method for building a tire according to claim 3 or claim 4, wherein the winding of the rubber strip material (1) is performed such that the inclination angle (θ) of the inclined portion of the rubber strip material (1) with respect to the tire circumferential direction in the inclined region (G) is set to 45° or less.

6. A method for building a tire according to claim 3 or claim 4, wherein the length (E) in the tire circumferential direction of the inclined region (G) is set to 1/5 or less of the length (E) of one winding of the rubber strip material (1).

7. A method for building a tire according to claim 3 or claim 4, wherein the rubber strip material (1) is wound so that, assuming the width (A) of the rubber strip material (1) to be 5 to 50mm and the overlapping margin (B) of the rubber strip material (1) to be 4/5 to 1/5 of the width (A) of the rubber strip material (1), the inclination angle (θ) of the rubber strip material (1) with respect to the tire circumferential direction in the inclined region (G) is 45° or less and the length (E) of the inclined region (G) in the tire circumferential direction is no less than 1/5 and no more than 5 times the width of the rubber strip material (1).
